(19) Europäisches Patentamt
European Patent Office
Office européen des brevets

(11) **EP 2 947 035 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(51) Int Cl.:
*B66C 13/16* *(2006.01)*          *B66C 23/90* *(2006.01)*
*G01G 19/20* *(2006.01)*          *G01G 19/08* *(2006.01)*
*G01G 23/01* *(2006.01)*

(21) Anmeldenummer: **15167366.2**

(22) Anmeldetag: **12.05.2015**

(54) **VERFAHREN ZUR BESTIMMUNG DER AUFGENOMMENEN LAST EINER ARBEITSMASCHINE SOWIE ARBEITSMASCHINE, INSBESONDERE KRAN**

METHOD FOR DETERMINING THE LOAD ON A WORKING MACHINE AND WORKING MACHINE, IN PARTICULAR A CRANE

PROCÉDÉ DE DÉTERMINATION DE LA CHARGE D'UNE MACHINE DE TRAVAIL ET MACHINE DE TRAVAIL, EN PARTICULIER UNE GRUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.05.2014 DE 102014007635**

(43) Veröffentlichungstag der Anmeldung:
**25.11.2015 Patentblatt 2015/48**

(73) Patentinhaber: **Liebherr-Werk Nenzing GmbH 6710 Nenzing (AT)**

(72) Erfinder:
• **Schwarzhans, Dr. Andreas 6780 Schruns (AT)**
• **Eberharter, Dr. Johannes Karl 6822 Satteins (AT)**

(74) Vertreter: **Laufhütte, Dieter Lorenz Seidler Gossel Rechtsanwälte Patentanwälte Partnerschaft mbB Widenmayerstraße 23 80538 München (DE)**

(56) Entgegenhaltungen:
EP-A1- 2 524 892          WO-A1-2009/054736
WO-A1-2014/015844          DE-A1- 10 146 421
DE-A1-102010 025 022

**Beschreibung**

Die Erfindung betrifft ein Verfahren zur Bestimmung der aufgenommenen Last einer Arbeitsmaschine für den dynamischen Materialumschlag, wobei die Last während des Arbeitsbetriebes mittels eines Lastmodels bestimmt wird.

Bisher war es bekannt, bei Arbeitsmaschinen zum Umschlagen von Lasten geeignete Kraftaufnehmer im Bereich des Lastaufhängepunktes anzuordnen, um die jeweils aufgenommene Förderlast direkt zu messen. Insbesondere bei dynamischen Arbeitsmaschinen wird die Lastmessung massiv durch äußere Einflüsse gestört, so dass für die Lastmessung der Maschinenbetrieb erheblich eingeschränkt werden muss, um die Wahrscheinlichkeit möglicher Störeinflüsse zu reduzieren. Daneben kann die Lastmessung bei Kranen auch durch den Seildurchhang und das Seilgewicht selbst beeinflusst werden und dadurch zu ungenauen Ergebnissen führen. Um dieser Problematik Rechnung zu tragen wurden bisher diverse Lösungsansätze, wie Seillängenkompensationsverfahren, Kalmanfilter zur Lastschätzung, Mittelwertfilter etc. getestet, die allesamt bisher nur unbefriedigende Ergebnisse brachten.

Lastmessungen können jedoch auch für Arbeitsmaschinen von Interesse sein, die keine entsprechende Sensorik zur direkten Erfassung der aufgenommenen Last aufweisen bzw. bei denen die Montage geeigneter Sensoren aus Kostengründen oder technisch Gründen, etwa aufgrund der äußeren Rahmenbedingungen am Einsatzort (Erschütterungen, Temperatureinflüsse), nicht möglich ist bzw. als nicht sinnvoll erscheint. Zudem kann es sein, dass die Integration einer entsprechenden Sensorik mit der Inkaufnahme von untragbaren Performanceeinbußen verbunden ist. Dies trifft insbesondere bei Arbeitsmaschinen zu, die in einem rauen Arbeitsumfeld, insbesondere zum Materialumschlag, bewegt und eingesetzt werden.

DE102010025022 offenbart ein Verfahren gemäß dem Oberbegriff des Anspruchs 1. WO2009/054736 offenbart ein weiteres Verfahren zur Bestimmung der aufgenommen Last einer Arbeitsmaschine.

Die Aufgabe der vorliegenden Erfindung besteht also darin, die von einer Arbeitsmaschine aufgenommene Last ohne Performanceeinbußen mit einer einfachen bzw. bereits vorhandenen Sensorik exakt bestimmen zu können. Dies ist insbesondere für Arbeitsmaschinen, insbesondere Hafen- bzw. Schiffskrane wünschenswert, die in einem rauen Arbeitsumfeld, insbesondere zum Materialumschlag, bewegt und eingesetzt werden.

Gelöst wird diese Aufgabe durch ein Verfahren gemäß der Merkmalskombination des Anspruchs 1. Vorteilhafte Ausgestaltungen des Verfahrens sind Gegenstand der sich an den Hauptanspruch anschließenden abhängigen Unteransprüche.

Ziel des Verfahrens ist eine robuste und möglichst exakte Lastschätzung unter Verwendung bereits installierter Sensoren einer Arbeitsmaschine. Die konkrete Sensorart und Sensoranzahl spielt für die Verfahrensdurchführung keine entscheidende Rolle, zur Verfahrensausführung werden lediglich Sensoren vorausgesetzt, deren Messwerte von der aufgenommenen Last in irgendeiner Weise beeinflusst werden. Dadurch lässt sich das Verfahren beliebig für jede Art von Maschine einsetzen, es ist lediglich eine Anpassung der Maschinensteuerung notwendig, weitergehende Hardwaremodifikationen sind unnötig bzw. nur in begrenztem Umfang auszuführen. Es kann vielmehr mit der ohnehin bereitgestellten Hardware der Maschine gearbeitet werden.

Gemäß der vorliegenden Erfindung umfasst das erfindungsgemäße Verfahren zwei Phasen, nämlich eine Kalibrierungsphase und eine Anwendungsphase. Mithilfe der Kalibrierungsphase soll vorab ein individuelles Lastmodell entwickelt und bestimmt werden, das während der Arbeitsphase als Berechnungsvorschrift für die Bestimmung der aufgenommenen Last herangezogen wird.

Erfindungsgemäß wird zu Beginn der Kalibrierungsphase zunächst eine Vielzahl an betriebsüblichen Maschinenabläufen mit einer aufgenommenen Referenzlast ausgeführt. Betriebsübliche Maschinenabläufe umfassen diejenigen Maschinenbewegungen, die auch während des regulären und beabsichtigten Arbeitsbetriebs üblicherweise ausgeführt werden. Die Qualität der durch das Verfahren erzielbaren Ergebnisse nimmt mit der Anzahl und Vielfältigkeit der während der Kalibrierungsphase vorgenommenen sinnvollen Maschinenabläufe zu.

Gemäß einer vorteilhaften Ausgestaltung besteht die Möglichkeit, das Kalibrierungsergebnis auf Arbeitsmaschinen desselben Typs zu exportieren. Das Verfahren bietet quasi eine Im- und Exportmöglichkeit für Kalibrierungsdaten. Dies eröffnet die Möglichkeit, die Kalibrierungsphase auf einer Arbeitsmaschine, insbesondere auf einem Prototyp, auszuführen und das Ergebnis als Basiskalibrierung für weitere Maschinen selben Typs zu verwenden.

Während der Ausführung der betriebsüblichen Maschinenabläufe werden alle oder nahezu alle verfügbaren Maschinenparameter aufgezeichnet. Als verfügbare Maschinenparameter sind Daten und Informationen zu verstehen, die während des Maschinenbetriebs von der Maschine selbst erfasst und aufgezeichnet werden können. Darunter fallen etwaige Sensorwerte der eingesetzten Maschinensensorik als auch etwaige Maschinenzustände, die üblicherweise der Maschinensteuerung bekannt oder einfach ableitbar sind.

Als Referenzlast wird eine Last mit bekanntem Gewicht verwendet. Die Kenntnis des konkreten Referenzlastgewichtes wird für die Verfahrensdurchführung vorausgesetzt.

In einem nachfolgenden Verfahrensschritt wird auf Grundlage der aufgezeichneten Maschinenparameter eine Signifikanzanalyse gestartet, um aus den verfügbaren Maschinenparametern die statistisch signifikanten Parameter herauszufiltern, die sich durch eine Abhängigkeit von der aufgenommenen Last auszeichnen. Dazu werden keine Vorkenntnisse vorausgesetzt, sondern die Analyse wird ausschließlich auf Grundlage der aufgezeichneten verfügbaren Maschinenparameter angestellt.

Unter Verwendung der ermittelten statistisch signifikanten Parameter wird durch Ausführung eines Lern- und/oder Optimierungsalgorithmus ein maschinenindividuelles Lastmodell generiert, das den Zusammenhang der als signifikant bestimmten Parameter und der Last beschreibt. Bei der Generierung des Lastmodells werden bewusst etwaige bekannte physikalische Modelle, Kennlinienfelder, etc., ausser Acht gelassen, sondern das Modell wird ohne jegliche Vorkenntnis nur auf Grundlage der während der Kalibrierungsphase aufgezeichneten Daten erzeugt.

Das generierte maschinenindividuelle Lastmodell kann anschließend während der Anwendungsphase, d. h. während dem üblichen Maschinenbetrieb, als Berechnungsvorschrift für die Abschätzung/Berechnung der aufgenommenen Last herangezogen werden, wobei unter Berücksichtigung der als signifikant bestimmten Parameter, die sich während des Maschinenbetriebs erfassen und bestimmen lassen, die exakte aufgenommene Last abgeschätzt werden kann.

Das während der Kalibrierungsphase erzeugte Lastmodell und die Auswahl der dazu verwendeten signifikanten Parameter werden ohne Vorwissen der zugrundeliegenden Physik gefunden. Mit dem erfindungsgemäßen Verfahren werden maschinenindividuelle Lastmodelle generiert, die gegenüber abstrakten physikalischen Modellen die Realität deutlich besser abbilden, da diese individuell für jede Arbeitsmaschine in Abhängigkeit der verfügbaren Sensorik bzw. Zustandserkennung erzeugt werden. Bekannte mathematische Modelle wie Kalmanfilter, so zum Beispiel zur Implementierung eines Beobachters, Design- oder Geometrieparameter, Kennfelder, wie zum Beispiel Lastkurven, werden zur Verfahrensausführung nicht apriori benötigt oder berücksichtigt.

Möglich ist eine "online" und/oder "offline" Ausführung der Kalibrierungsphase.

Als Sensormesswerte der Maschinenparameter finden beispielsweise etwaige sensorisch erfasste Drücke, Winkelstellungen, Kraftmesswerte, etc. Berücksichtigung, während Maschinenzustände beispielsweise bestimmte Stellungen der Bedienhebel, etc. darstellen. Auch können nicht unmittelbar mit der Last zusammenhängende Größen Berücksichtigung finden, wie beispielsweise die aktuelle Motorleistung, die Außentemperatur etc..

Idealerweise wird auf Grundlage des statistischen Lern- bzw. Optimierungsalgorithmus ein neuronales Netz erstellt, das ein individuelles Lastmodell wiederspiegelt. Als statistische Lern- bzw. Optimierungsalgorithmen sind weiterhin die Regression und/oder Entscheidungsbäume und/oder Clusteringmethoden und/oder Bayes Learning und/oder Instance Based Learning und/oder Reinforcement Learning geeignet.

Gemäß einer bevorzugten Weiterentwicklung des Verfahrens ist es denkbar, dass durch den statistischen Lern- und/oder Optimierungsalgorithmus nicht nur ein Lastmodell sondern zunächst eine Auswahl an mehreren individuellen Lastmodellhypothesen generiert wird. Aus der Auswahl kann dann das anwendungsbedingt optimale Lastmodell gewählt werden, das die stabilsten Ergebnisse für die in der Kalibrierphase aufgezeichneten Daten zeigt. Das gewählte Lastmodell charakterisiert primär die systematischen Zusammenhänge zwischen Last, Sensor- bzw. Zustandswerten und versucht gerade nicht, das zufällige Messrauschen gewisser Sensoren komplett zu beschreiben (Overfitting).

Neben den durch die Maschine bereitgestellten Sensoren lassen sich als Maschinenparameter zusätzlich Sensormesswerte externer Sensoriken verwenden. Externe Sensoriken dienen vorzugsweise zur Beobachtung des Arbeitsmaschinenumfeldes, so zum Beispiel bei Schiffskranen, zur Beobachtung und Erfassung von Schiffsbewegungen/Wellenbewegungen. Sinnvollerweise werden derartige Sensordaten ergänzend zur erfindungsgemäßen Lastmodellbestimmung berücksichtigt, wodurch eine von der Umwelt entkoppelte Lastschätzung ermöglicht wird, was allein auf Grundlage einer direkt an der Arbeitsmaschine angebrachten Kraftmesseinrichtungen technisch nicht realisierbar wäre. Die durch die Umwelt hervorgerufenen Bewegungen lassen sich beispielsweise durch inertiale Messeinrichtung erfassen.

Mit der Generierung des individuellen Lastmodells werden zweckmäßiger Weise die optimalen signifikanten Parameter bestimmt, die sich als die besten und wesentlichen Parameter zur Lastschätzung herauskristallisieren. Diese Parameter werden dann während der Anwendungsphase gemessen bzw. bestimmt und zur Berechnung der aufgenommenen Last mit Hilfe des Lastmodells eingesetzt.

In einer vorteilhaften Ausgestaltung des erfindungsgemäßen Verfahrens kann zusätzlich während des Arbeitsbetriebs eine statistische Analyse der berechneten Lastwerte über einen Lastzyklus erfolgen. Durch den Einsatz einer Lastzykluserkennung können beispielsweise Betriebsphasen erkannt werden, während denen durchgehend eine gleichbleibende Last aufgenommen ist. Während dieser Phasen wird unter Einsatz des Lastmodells eine Menge von geschätzten Lastwerten bestimmt, die einer statistischen Analyse unterzogen werden. Die statistische Auswertung erlaubt nicht nur die Korrektur zufälliger Abweichungen und die Optimierung der Lastbestimmung, sondern es lässt sich zudem ein Toleranzbereich definieren, der mögliche Abweichungen der geschätzten Lastwerte beschreibt und damit eine Genauigkeitsaussage zulässt.

Weiterhin kann es vorgesehen sein, dass während des Arbeitsbetriebs Messdaten bzw. Parameter während den Leerfahrten der Arbeitsmaschine aufgezeichnet werden, wobei diese gesammelten Parameter für die Überwachung des zum Einsatz kommenden Lastmodells und/oder der signifikanten Parameter verwendet werden. Eine Leerfahrt ist vergleichbar mit einer Arbeitsbewegung mit Referenzlast, da die aufgenommene Last als bekannt vorausgesetzt werden kann. Folglich kann während Leerfahrten die Gültigkeit bzw. Genauigkeit des eingesetzten Lastmodells und/oder die verwendete Auswahl signifikanter Parameter geprüft werden. Anhand möglicher Ergebnisabweichungen können relevante Änderungen an der Arbeitsmaschine als auch geänderte Umweltbedingungen erkannt werden, so zum Beispiel Reibungsänderungen an der Arbeitsmaschine, Defekte bestimmter Maschinenkomponenten, Sensorausfall bzw. Sensordrifts als auch geänderte Temperaturbedingungen.

Neben der Überwachung kann zusätzlich oder alternativ auch eine adaptive Anpassung des Verfahrens, d.h. des eingesetzten Lastmodels bzw. der Parameter, während Leerfahrten der Maschine erfolgen. In diesem Zusammenhang ist es zweckmäßig, wenn das Lastmodell darauf basierend adaptiv an die geänderten Maschinenbedingungen, hervorgerufen durch Temperaturänderungen etc., angepasst wird, um trotz einer geänderten Maschinencharakteristik bzw. geänderter Umweltbedingungen ein möglichst exaktes Messergebnis erzielen zu können.

Denkbar ist es zudem, dass während der Kalibrierungsphase aufgezeichnete Messdaten zu Parametern, die nicht als signifikant erachtet und damit nicht zur Modellbildung berücksichtigt wurden, nachfolgend jedoch für die Validierung des erzeugten bzw. gewählten individuellen Lastmodells verwendet werden. Es wird also ein Teil der Messaufzeichnung für die Modellbildung verwendet, während der verbleibende Teil der Messaufzeichnung für die Validierung des gebildeten Models verwendet wird.

Neben dem erfindungsgemäßen Verfahren betrifft die vorliegende Erfindung eine Arbeitsmaschine, insbesondere einen Kran, besonders bevorzugt einen Schiffskran, mit einer Kransteuerung zur Durchführung des Verfahrens gemäß der vorliegenden Erfindung bzw. einer vorteilhaften Ausgestaltung der Erfindung. Die Vorteile und Eigenschaften der erfindungsgemäßen Arbeitsmaschine entsprechen offensichtlich denen des erfindungsgemäßen Verfahrens, weshalb an dieser Stelle auf eine wiederholende Beschreibung verzichtet wird.

Besonders bevorzugt erlaubt das erfindungsgemäße Verfahren den Einsatz ein oder mehrerer nicht kalibrierter Sensoren an der Maschine bzw. als externe Sensoren zur Beobachtung des Maschinenumfeldes.

Weitere Vorteile und Eigenschaften der Erfindung sollen im Folgenden anhand der in den Zeichnungen dargestellten Ausführungsbeispiele näher erläutert werden. Es zeigen:

Fig. 1:      ein Blockschaltbild zur Verdeutlichung des erfindungsgemäßen Verfahrens,

Fig. 2:      ein Ausführungsbeispiel der Erfindung zur Signifikanzanalyse und Modellbildung und

Fig. 3 bis 6:      unterschiedliche Anwendungsbeispiele des erfindungsgemäßen Verfahrens.

Ziel der Erfindung ist es, mit vorhandenen Sensoren eine robuste und genaue Lastschätzung zu erzielen. Oberste Priorität hat eine genaue Lastmessung ohne Performanceeinbussen durch eventuell notwendige Maschinenlimitierungen zur genauen Lastmessung (z.B. Maschinenstillstand, Beschleunigungs- und/oder Geschwindigkeitsreduzierungen).

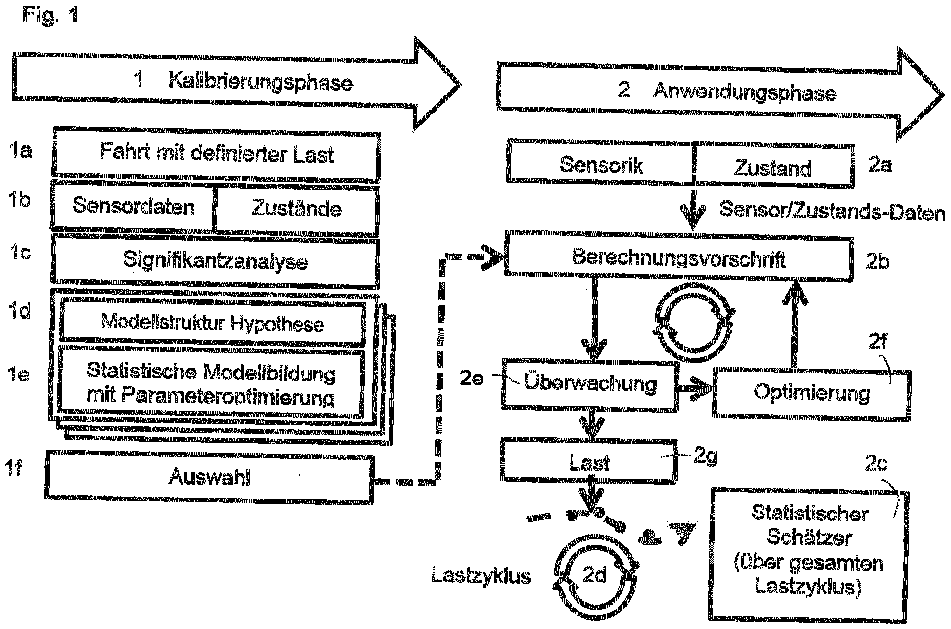

Das angeführte Blockschaltbild der Figur 1 zeigt das erfindungsgemäße Verfahren, das aus zwei Phasen besteht, nämlich einer dynamischen Kalibrierungsphase 1, während der ein Lastmodel gefunden und gelernt wird, und einer Anwendungsphase 2, in der dieses generierte Lastmodell angewandt wird.

Die Kalibrierungsphase 1 kann offline und/oder online erfolgen. Zuerst werden in einem ersten Schritt 1a allgemein übliche bzw. typische Bewegungen mit der Arbeitsmaschine und einer definierten aufgenommenen Last ausgeführt, um den Einfluss der Last auf das Maschinenverhalten darzustellen. Während der Ausführung der Maschinenbewegungen 1a werden die Werte 1b sämtlicher verfügbarer Sensorik (z.B. Kraftmesssensor, Drücke, Winkel, etc.) und Maschinenzustände (z.B. Joystickstellungen, etc.) als auch nicht unmittelbar mit der Last zusammenhängende Größen (z.B. Motorleistung, Aussentemperatur, etc.) aufgezeichnet. Die Datenmenge kann durch Messergebnisse weiterer Sensoren, die das Maschinenumfeld beschreiben, ergänzt werden.

Im nachfolgenden Schritt 1c werden die statistisch signifikanten Zusammenhänge zwischen Sensor- und Zustandswerten 1b, zusammenfassend als Maschinenparameter bezeichnet, und der bewegten Referenzlast bestimmt. Das Ergebnis dieses Schrittes 1c zeigt, welche Parameter bzw. nichtlineare transformierte Parameter (Trigonometrie, ...) einen statistisch signifikanten Einfluss auf die Last zeigen. Dazu sind keinerlei physikalische Vorkenntnisse der Prozesszusammenhänge notwendig. Im Gegensatz dazu erfordern die aus dem Stand der Technik vorbekannten Verfahren ein apriorie definiertes physikalisches Modell, Kennlinienfelder, etc.. Das erfindungsgemäße Verfahren ist ohne Adaption auf jede Art von Arbeitsmaschine mit relevanter Sensorik anwendbar.

In einem weiteren Schritt 1d werden mit einem statistischen Lernverfahren (z.B. Neuronales Netz, NN, BDT, Regressionsmodelle, etc.) mit den oben als signifikant gefundenen Parametern ein oder mehrere Hypothesen von Modellstrukturen aufgestellt und daraus die Hypothese ausgesucht, die für die Anwendung die stabilsten Ergebnisse über die in der Kalibrierphase aufgezeichneten Daten liefert. Ergebnis ist eine optimierte Modellstruktur 1d (im Falle eines Neuronalen Netzes z.B. die Anzahl der "Hidden Layer"). Zudem werden im Schritt 1e die für die ausgewählte Modellstruktur optimalen Modellparameter gelernt, die den Zusammenhang zwischen vorhandenen Sensorwerten und Last mathematisch bestmöglich beschreiben. Die Optimierungskriterien 1f erfolgen derart, dass das stabilste Modell ausgewählt wird, das primär die systematischen Zusammenhänge zwischen Last und Sensorwerten beschreibt und nicht versucht das zufällige Messrauschen der Sensoren komplett zu beschreiben (Overfitting). Solche statistischen Gütemaße als Kriterium sind beispielsweise Chi Quadrat, Kolmogorow-Smirnow-Test, G-Test, Exakter Test nach Fischer, etc..

Es wird darauf hingewiesen, dass die optimierte Modellstruktur 1d und die optimierten/signifikanten Parameter 1e ohne Vorwissen der zugrundeliegenden Physik gefunden werden. Folglich kann davon ausgegangen werden, dass diese Modelle 1d, 1e die Realität besser abbilden als irgendwelche abstrahierten Modelle, wie sie z.B. bei Kalmanfiltern verwendet werden. Weiteres werden auch keine Design- und Geometrie-Parameter, sowie keine Kennfelder, wie z.B. Lastkurven, apriori benötigt.

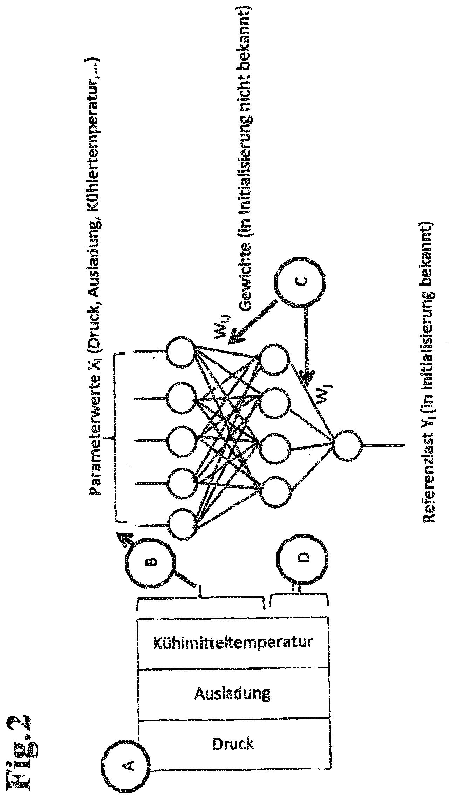

Die notwendigen Schritte zur Bestimmung des Lastmodells in Form eines neuronalen Netzes werden im Folgenden anhand der Darstellung der Figur 2 erläutert. Um die Umsetzung des Verfahrens zu verdeutlichen, soll eine mögliche Implementierung mittels neuronalem Netzes erläutert werden:

- In einem ersten Schritt werden die Daten der ausgewählten Sensoren, Maschinenzustände, etc. im Takt der Maschinensteuerung während der Bewegungen in der Kalibrierungsphase mit einem bekannten Referenzgewicht als Last aufgezeichnet (A). Mögliche Sensordaten betreffen beispielsweise die Kühlmitteltemperatur, die Ausladung der Last sowie den Druck in einem Stellzylinder. Die Aufzählung ist jedoch nur exemplarisch und ist nicht als einschränkend für den Gegestand der Erfindung zu werten.
- Ein Teil der aufgezeichneten Werte $X_i$ wird nun zur Parametervalidierung (Signifikanz) und Modellbildung verwendet (B)
- Die Gewichte des neuronalen Netzes werden mit den verwendeten Datensätzen und dem aus der Literatur bekannten Optimierungsverfahren "Backpropagation" bestimmt (C). Damit ergibt sich ein Modell für die Referenzlast Y aus den Gewichten $w_{i,j}$ wie folgt:

$$Y = C_o + \sum_{j=1}^{k} \left( W_j \tanh \left( c_j + \sum_{i=1}^{z} x_i \, w_{i,j} \right) \right)$$

- Die Größe der Gewichte, mit denen ein Parameter ins Modell eingeht, gibt einen Hinweis auf die Signifikanz des Parameters. Um die Parameterauswahl zu automatisieren, werden im aufgezeigten Ausführungsbeispiel die zum Lernen des Modelles nicht verwendeten Daten zur Validierung verwendet (D), indem an Hand dieser Messwerte und den gelernten Modellgewichten die Referenzlast berechnet werden. Da die tatsächlich verwendete Last für diese Datensätze bekannt ist, lässt sich an Hand der Differenzen zwischen den vom Modell gelieferten Referenzlasten und der tatsächlich verwendeten die Güte des Modelles beurteilen. Zur Signifikanzbestimmung der Parameter wird nun ein Toleranzwert für das Modell vorgegeben (z.B. Last soll auf 10% genau beschrieben werden) und das Modell durch weglassen einzelner Parameter solange verkleinert - im Fachjargon PUNING genannt - bis das resultierende Modell nicht mehr in der Lage ist, die Referenzlasten mit ausreichender Genauigkeit vorherzusagen. Das Resultat ist ein minimales Modell, das mit gewünschter Genauigkeit in der Lage ist die Referenzlast vorherzusagen.

Das gefundene Modell kann nachfolgend in der Anwendungsphase 2 (Figur 1), d.h. während des regulären Maschinenbetriebs, in Form einer Berechnungsvorschrift 2b eingesetzt werden, um anhand der relevanten Parameter 2a eine korrespondierende von der Maschine umgeschlagene Last 2g zu bestimmen. Die Berechnungsvorschrift 2b hängt von den relevanten Parametern 2a ab, die sich mittels der Maschinensensorik und der Zustandserkennung während des Arbeitsbetriebes als aktuelle Messwerte erfassen lassen. Neben der Lastberechnung eignet sich das Modell auch zum besseren Verständnis der apriori nicht bekannten physikalisch auftretenden Phänomene.

Das gefundene Lastmodell erlaubt sowohl eine optimierte Lastmessung bei direkter Kraftmessung, als auch im Falle des Nichtvorhandenseins einer direkten Lastmessung und zwar nur unter Verwendung vorhandener Sensoren, die den Zusammenhang zwischen Last und Messwerten nur indirekt beschreiben (z.B. Hydraulik, Elektrik, Antriebssystem, etc.). Alle hilfreichen Informationen zur Lastvorhersage werden verwendet, womit nicht zwingend eine Kraftmesssensorik vorhanden sein muss, um die Lastvorhersage durchzuführen, und weitere Effekte (z.B. Dynamik) können dadurch eliminiert werden. Somit wird die Arbeitsmaschine zum dynamischen Wiegesystem.

Die Ergebnisse der Lastschätzung können direkt zur Weiterverarbeitung verwendet werden. In Kombination mit der Erkennung eines Lastzyklus 2d (durchgehender Zeitbereich mit identischer Lastaufnahme) eignen sich die Werte des Modelles verteilhaft (optimiert auf die Beschreibung systematischer Einflüsse) für den Einsatz statistischer Schätzer 2c, die den verbleibenden Zufall minimieren sollen. Dadurch wird eine Lastschätzung über viele Messungen desselben Vorganges 2d ermöglicht. Genaue Lastangaben incl. statistischer Toleranzangaben werden möglich - auch bei nur indirekter und/oder unzureichender Sensorik. Beim Einsatz auf einer Arbeitsmaschine können nun auf Grundlage einer Erkennung eines Lastzyklus, beispielsweise die Leerfahrtanteile der Maschine zur Modellüberwachung 2e und/oder Optimierung 2f verwendet werden (z.B. Temperaturdrifts, Reibung).

Konkret können bei einer Online-Implementierung des beschriebenen Verfahrens, sofern Maschinenleerfahrten aufgezeichnet werden, Maschinenveränderungen (z.B. Temperaturdrifts, Reibungsänderungen, eventuell auch Sensordrift/Sensorausfall, etc.) erkannt werden. Folglich können das Lastmodell und die Auswahl an signifikanten Modelparametern selbst überwacht 2e und deren Gültigkeit zu jedem Zeitpunkt sichergestellt werden.

In einer erweiterten Ausführung ist es möglich, dass die Maschine die Leerfahrten während des laufenden Betriebs dazu verwendet, das Modell und/oder die Parameter zu optimieren 2f, um sich an Veränderungen adaptiv anzupassen (z.B. Temperatureffekte, Reibungsänderungen wegen dem Einbau von neuen Komponenten, wie z.B. Lagerreibung, Seilreibung, etc.). Damit ist das Verfahren im Gegensatz zum Stand der Technik problemlos adaptiv einsetzbar und in der Lage, selbst während der Kalibrierphase 1 nicht aufgetretene Phänomene noch später in der Anwendungsphase 2 miteinzubeziehen.

Bei zyklischen Bewegungen kann die Messgenauigkeit dadurch weiter gesteigert werden, indem über Bereiche mit identischer Lastaufnahme 2d statistische Schätzer 2c eingesetzt werden. Da die Lastwerte, die das Modell zu jedem Zyklus der Steuerung liefert, weitgehend frei von systematischen Fehlern sind, lassen sich der verbleibenden Zufall (z.B. Rauschen der Sensoren) mit einem Schätzwert (exakte Last) und einer Messsicherheit für einen Hub genau quantifizieren.

Durch den Einsatz des statistischen Schätzers 2c können die berechneten zyklischen Lastergebnisse genauer als die durch den Hersteller garantierten Messgenauigkeiten der verwendeten Sensoren sein.

Zur von der Umwelt entkoppelten Lastschätzung erlaubt das Verfahren die Integration und Berücksichtigung sämtlicher externer Sensoren, die zum Beobachten des Maschinenumfeldes eingesetzt werden und deren beobachtete Effekte Einfluss auf die Lastbestimmung haben (z.B. Schiffsbewegungen/Wellenbewegungen beim Einsatz von der Arbeitsmaschine auf dem Wasser, vor allem auf hoher See). Es wird damit möglich, eine komplett von der Umwelt entkoppelte Lastbestimmung durchzuführen, die durch den Einsatz entsprechender Kraftmesseinrichtungen direkt an Arbeitsmaschinen nicht möglich wäre. Die durch die Umwelt hervorgerufenen Bewegungen können z.B. durch eine IMU (inertiale Messeinrichtung) erfolgen.

In der Kalibrierungsphase 1 wird eine Teilmenge der gesammelten Messdaten für die Modelloptimierung 1d verwendet. Die noch nicht verwendeten Daten können dann zur Modellvalidierung herangezogen werden und erlauben damit eine Beurteilung der zu erwartenden Messgenauigkeit und der Güte des gelernten Modells samt Parameter. Im Gegensatz zu einer statischen Kalibrierung (bspw.: Waage, Kraftmessung, etc.) beinhaltet die hier angewandte Kalibrierung auch sämtliche andere möglichen Einflussgrössen (z.B. Dynamik, Umgebungseinflüsse, Messfehler der Sensorik, etc.).

Das Verfahren erlaubt ohne jegliche Einzelkalibrierung der verwendeten Sensoren deren umgehende Verwendung zur genauen Lastbestimmung. Damit ist das Verfahren unabhängig von Fehlern bei der Kalibrierung der Sensoren. Es lassen sich demnach nicht kalibrierte Sensoren in der Maschine einsetzen, was zu Kostenvorteilen bei der Herstellung als auch Wartung der Maschine führen kann.

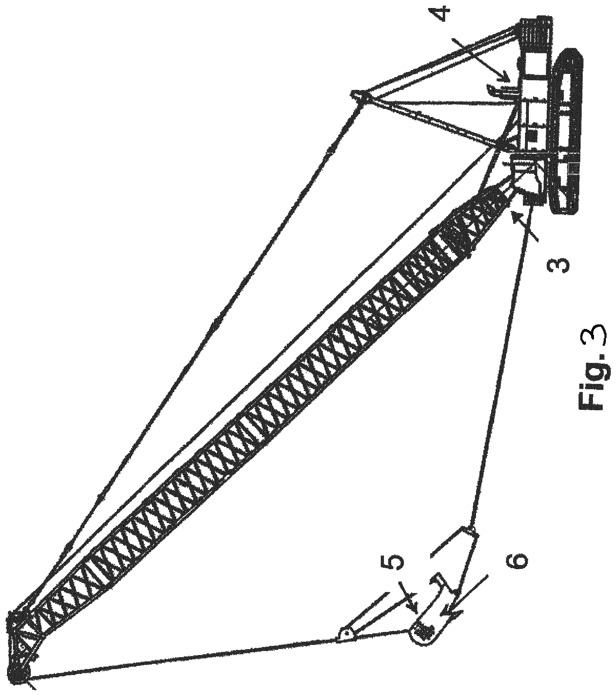

Nachfolgenden sollen die bisherigen Praxisprobleme bei der Lastbestimmung und deren Lösung durch das erfindungsgemäße Verfahren anhand der Figuren 3 bis 6 verdeutlicht werden.

Exemplarisch ist in Figur 3 eine Arbeitsmaschine in Form eines Raupenkrans dargestellt, die nur über eine einfachste Sensorik verfügt. Beispielhaft ist die Maschine mit Sensoren zur Winkelmesser 3 für den Ausleger, diverse hydraulische Stellparameter der Winden 4 ausgestattet, an Hand derer bisher nicht unmittelbar bzw. nicht mit entsprechender Genauigkeit eine Lastbestimmung möglich ist. Das erfindungsgemäße Verfahren erlaubt dennoch, die im Greifer 5 enthaltene Last 6 genau zu bestimmen.

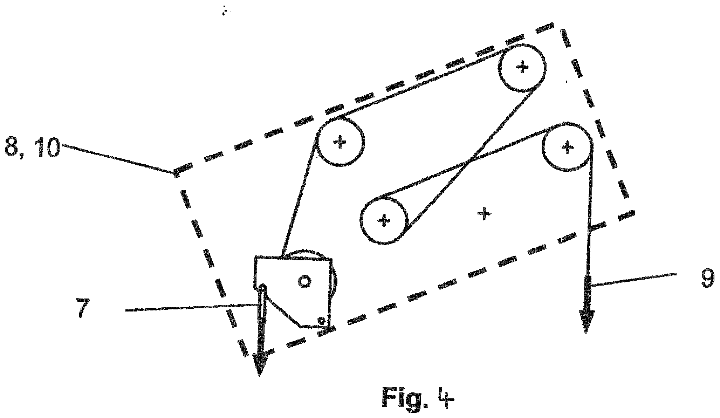

Des Weiteren ist in Figur 4 die Konfiguration einer Arbeitsmaschine ausgeführt, die über eine genaue Kraftmessvorrichtung an einer Winde verfügt. Diese Kraftmessvorrichtung ist aber nur indirekt über ein Seil, das über mehrere Umlenkrollen 8 geführt, ist mit der Last 9 verbunden. Damit sind im Messsignal der Kraftmessvorrichtungen sämtliche dazwischen auftretenden Phänomene 10 (z.B. Reibung, Seildurchhang, Seilgewicht, Biegungen, Hebelwirkungen, ...) enthalten, welche die Lastmessung massiv verfälschen. Die Schwierigkeit bei bestehenden Verfahren liegt darin, alle Einflüsse zu erkennen und physikalisch richtig zu beschreiben. Das beschriebene Verfahren gemäß der Erfindung findet aus den verfügbaren Daten eine globale Lösung (beinhaltet alle in den Referenzfahrten abgebildeten Zustände der Maschine).

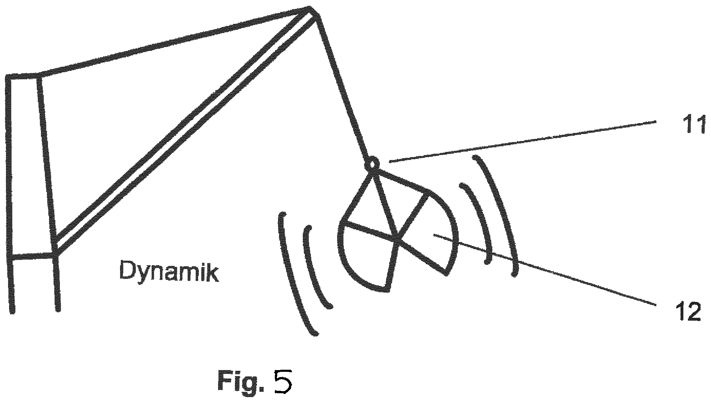

Des Weiteren ist in Figur 5 die Konfiguration einer Arbeitsmaschine ausgeführt, bei der zum Minimieren der im vorgenannten Beispiel der Figur 4 dargestellten Effekte die Kraftmesseinheit 11 möglichst nahe an der zu messenden Last 12 angebracht ist. Dies trägt jedoch nur teilweise zur Problemlösung bei, da einerseits nicht alle Effekte eliminiert werden können (z.B. Dynamik), andererseits die Kalibrierung einer solcher Messvorrichtung in der Regel nur den statischen Maschinenzustand berücksichtigt, was zur Folge hat, dass zur genauen Lastbestimmung ein statischer Maschinenzustand, d.h. ein Maschinenstillstand gefordert wird oder eine konstante Geschwindigkeit über einen länger andauernden Zeitraum verlangt wird. Hierbei kann jedoch oftmals nur ein Bewegungsfreiheitgrad, bspw. eine reine Vertikalbewegungen, ohne Dynamik gemessen werden.

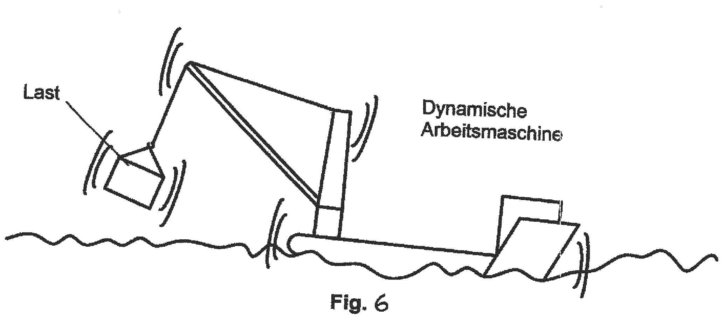

Die in Figur 6 angedeuteten Effekte, hervorgerufen durch Umwelteinflüsse (z.B. Wellenbewegungen bei Einsatz der Arbeitsmaschine auf hoher See oder Arbeitsmaschinen im unebenen Gelände mit rauen Einsatzbedingungen, z.B. Staub, Lärm, Erschütterung, EMV, etc.), sind damit nicht abzudecken. Das vorgeschlagene erfindungsgemäße Verfahren ist in der Lage, sämtliche dieser Einschränkungen zu überwinden. Da die Maschine dynamisch kalibriert wird, sind keine Performanceeinbussen durch messbedingte Wartezeiten notwendig und bei entsprechendem Monitoring der Umgebungsbedingungen, z.B. durch IMU (inertiale Messeinheit), ist eine komplett von Umwelteinflüssen entkoppelte Messung möglich.

## Patentansprüche

1. Verfahren zur Bestimmung der aufgenommenen Last einer Arbeitsmaschine für den dynamischen Materialumschlag, insbesondere eines Krans, **dadurch gekennzeichnet, dass** die Last während des Arbeitsbetriebes mittels eines Lastmodells berechnet wird und das Lastmodell während einer Kalibrierungsphase (1) der Arbeitsmaschine wie folgt bestimmt wird:

   - Ausführung einer Vielzahl an betriebsüblichen Maschinenabläufen (1a) mit einer aufgenommenen Referenzlast, während verfügbare Maschinenparameter (1b) aufgezeichnet werden,
   - Durchführung einer Signifikanzanalyse (1c) der aufgezeichneten Parameter (1b), um statistisch signifikante Parameter (1e) zu ermitteln, die eine Abhängigkeit von der Last zeigen,
   - Ausführung eines statistischen Lern- und/oder Optimierungsalgorithmus (1d) zur Erstellung eines maschinenindividuellen Lastmodells, das den Zusammenhang der als signifikant bestimmten Parameter (1e) und der Last beschreibt.

2. Verfahren nach Anspruch 1, **dadurch gekennzeichnet, dass** es sich bei den Parametern (1b) um mittels einer Sensorik der Arbeitsmaschine erfasste Messwerte und/oder um maschineninterne Zustände handelt.

3. Verfahren nach einem der vorhergehenden Ansprüche, **dadurch gekennzeichnet, dass** zur Kalibrierung (1) der Arbeitsmaschine keine physikalischen Modelle, Kennfelder, fixe Modellstrukturen apriori notwendig sind bzw. verwendet werden.

4. Verfahren nach einem der vorhergehenden Ansprüche, **dadurch gekennzeichnet, dass** das individuelle Lastmodell ein neuronales Netz ist oder als wenigstens ein Lern- und/oder Optimierungsalgorithmus die Regression und/oder Entscheidungsbäume und/oder Clusteringmethoden und/oder Bayes Learning und/oder Instance Based Learning und/oder Reinforcement Learning zum Einsatz kommen.

5. Verfahren nach einem der vorhergehenden Ansprüche, **dadurch gekennzeichnet, dass** als Parameter (1b) Sensormesswerte einer externen Sensorik berücksichtigt werden, die vorzugsweise zur Beobachtung des Arbeitsmaschinenumfeldes dienen, besonders vorzugsweise zur Beobachtung und Erfassungen von Schiffsbewegungen/Wellenbewegungen beim Einsatz der Arbeitsmaschine auf dem Wasser.

6. Verfahren nach einem der vorhergehenden Ansprüche, **dadurch gekennzeichnet, dass** durch den statistischen Lern- und/oder Optimierungsalgorithmus (1d) eine Auswahl an mehreren individuellen Lastmodellhypothesen erzeugt wird, aus der ein anwendungsbedingt optimiertes individuelles Lastmodell gewählt wird, das für die gewünschte Maschinenanwendung die stabilsten Ergebnisse über die in der Kalibrierphase (1) aufgezeichneten Daten liefert.

7. Verfahren nach einem der vorhergehenden Ansprüche, **dadurch gekennzeichnet, dass** weiterhin für das erstellte bzw. gewählte individuelle Lastmodell die optimalen signifikanten Parameter (1e) bestimmt werden, die den Zusammenhang zwischen Parametern (1b) und Last bestmöglich beschreiben, wobei während des Maschinenbetriebes die tatsächlich aufgenommene Last anhand des erstellten bzw. gewählten individuellen Lastmodells und der die optimalen signifikanten Parameter (1e) betreffenden Sensor- und/oder Zustandswerte (1b) der Arbeitsmaschine berechnet wird.

8. Verfahren nach einem der vorhergehenden Ansprüche, **dadurch gekennzeichnet, dass** während des Arbeitsbetriebes (2) eine statistische Analyse der innerhalb eines Lastzyklus 2d) berechneten Lastwerte erfolgt, um die Genauigkeit der Lastberechnung zu erhöhen und/oder mögliche Abweichungen des gerechneten Ergebnisses von der tatsächlichen Last zu bestimmen.

9. Verfahren nach einem der vorhergehenden Ansprüche, **dadurch gekennzeichnet, dass** die während der Leerfahrten der Arbeitsmaschine aufgezeichneten Sensor - und/oder Zustandsdaten zur Überwachung des Lastmodells und/oder der ausgewählten signifikanten Parameter verwendet werden, wobei weiterhin mittels der Überwachung insbesondere Maschinen- und/oder Umweltänderung, wie beispielsweise Temperaturdrifts, Reibungsänderungen, Defekte, Sensorausfall bzw. Sensordrift, etc., erkannt werden.

10. Verfahren nach Anspruch 9, **dadurch gekennzeichnet, dass** die während Leerfahrten der Arbeitsmaschine aufgezeichneten Parameter zur adaptiven Optimierung des verwendeten Lastmodells und/oder der Auswahl an signifikanten Parametern verwendet wird, um das Verfahren adaptiv an umwelt- und/oder maschinenbedingte Einflüsse und Änderungen, wie beispielsweise Temperatureffekte, Rüständerung und dadurch resultierende Reibungsänderungen, anzupassen.

11. Verfahren nach einem der vorhergehenden Ansprüche, **dadurch gekennzeichnet, dass** die während der Kalibrierungsphase (2) erfassten Parameter, die nicht zur Modellbildung berücksichtigt wurden, für die Validierung des erzeugten bzw. gewählten Lastmodells verwendet werden.

12. Arbeitsmaschine, bevorzugt Kran, mit einer Kransteuerung zur Durchführung des Verfahrens gemäß einem der vorhergehenden Ansprüche.

13. Arbeitsmaschine nach Anspruch 12, **dadurch gekennzeichnet, dass** die Maschine ein oder mehrere nicht kalibrierte Sensoren für die Verfahrensdurchführung aufweist.

**Claims**

1. Method for determining the received load of a working machine for dynamic material handling, in particular of a crane, **characterised in that** the load is calculated during the work operation by means of a load model and the load model is determined during a calibration phase (1) of the working machine as follows:

   - executing a plurality of routine machine sequences (1a) with a received reference load while available machine parameters (1b) are recorded,
   - carrying out a significance analysis (1c) of the recorded parameters (1b) in order to identify statistically significant parameters (1e) which exhibit a dependency on the load,
   - executing a statistical learning and/or optimisation algorithm (1d) for compiling a machine-customised load model which describes the relationship between the parameters (1e) determined as significant and the load.

2. Method according to claim 1, **characterised in that** the parameters (1b) are measured values detected by means of a sensor system of the working machine and/or internal statuses of the machine.

3. Method according to any of the preceding claims, **characterised in that** no physical models, characteristic maps or fixed model structures are required a priori or are used for calibrating (1) the working machine.

4. Method according to any of the preceding claims, **characterised in that** the individual load model is a neural network, or regression and/or decision trees and/or clustering methods and/or Bayesian learning and/or instance-based learning and/or reinforcement learning are used as at least one learning and/or optimisation algorithm.

5. Method according to any of the preceding claims, **characterised in that** as parameters (1b), measured sensor values from an external sensor system are taken into account which are preferably used for observing the working-machine environment, particularly preferably for observing and detecting ship movements/wave movements when the working machine is used on water.

6. Method according to any of the preceding claims, **characterised in that** by means of the statistical learning and/or optimisation algorithm (1d), a selection of a plurality of customised load-model hypotheses is generated, from which an applicational-optimized customised load model is selected, which load model provides the most stable results for the desired machine application by means of the data recorded in the calibration phase (1).

7. Method according to any of the preceding claims, **characterised in that** the optimal, significant parameters (1e) that best describe the relationship between parameters (1b) and load are also determined for the compiled or selected customised load model, with the load that is actually received during machine operation on the basis of the compiled or selected customised load model and the sensor and/or status values (1b) of the working machine relating to the optimal, significant parameters (1e) being calculated.

8. Method according to any of the preceding claims, **characterised in that** during the work operation (2), a statistical analysis of the load values calculated within a load cycle (2d) is carried out in order to increase the accuracy of the load calculation and/or to determine possible deviations of the calculated result from the actual load.

**9.** Method according to any of the preceding claims, **characterised in that** the sensor and/or status data recorded when the working machine is running empty are used for monitoring the load model and/or the selected significant parameters, with changes in the machine and/or the environment, such as temperature drift, changes in friction, defects, sensor failure or sensor drift, etc., also being identified in particular by means of the monitoring.

**10.** Method according to claim 9, **characterised in that** the parameters recorded when the working machine is running empty are used for adaptively optimising the load model used and/or the selection of significant parameters in order to adjust the method adaptively to environment-dependent and/or machine-dependent influences and changes, such as temperature effects, changes in equipment and changes in friction resulting therefrom.

**11.** Method according to any of the preceding claims, **characterised in that** the parameters detected during the calibration phase (2) which have not been taken into account for the modelling are used for validating the generated or selected load model.

**12.** Working machine, preferably a crane, comprising a crane controller for carrying out the method according to any of the preceding claims.

**13.** Working machine according to claim 12, **characterised in that** the machine comprises one or more uncalibrated sensors for carrying out the method.

**Revendications**

**1.** Procédé pour définir la charge prise en charge d'un engin de travail pour le transfert dynamique de matériau, en particulier d'une grue, **caractérisé en ce que**
la charge est calculée dans le mode de travail d'un modèle de charge, et le modèle de charge est défini au cours d'une phase d'étalonnage (1) de l'engin de travail comme suit :

- exécution d'une pluralité de cycles d'engin (1a) normaux avec une charge de référence prise en charge alors que des paramètres d'engin (1b) disponibles sont enregistrés,
- mise en oeuvre d'une analyse d'importance (1c) des paramètres (1b) enregistrés pour déterminer des paramètres importants sur le plan des statistiques (1e) qui indiquent une dépendance à la charge,
- exécution d'un algorithme d'apprentissage et/ou d'optimisation statistique (1d) pour créer un modèle de charge propre à l'engin qui décrit le lien entre les paramètres (1e) définis comme étant importants et la charge.

**2.** Procédé selon la revendication 1, **caractérisé en ce que** les paramètres (1b) sont des valeurs de mesure détectées au moyen d'un équipement de détection de l'engin de travail et/ou des états internes à l'engin.

**3.** Procédé selon l'une quelconque des revendications précédentes, **caractérisé en ce qu'**aucun modèle physique, aucun champ caractéristique, aucune structure de modèle ne sont a priori nécessaires ou ne sont utilisés pour étalonner (1) l'engin de travail.

**4.** Procédé selon l'une quelconque des revendications précédentes, **caractérisé en ce que** le modèle de charge individuel est un réseau neuronal ou la régression et/ou les arbres de décision et/ou les méthodes de regroupement et/ou l'apprentissage bayésien et/ou l'apprentissage basé sur les instances et/ou l'apprentissage par renforcement sont employés en tant qu'au moins un algorithme d'apprentissage et/ou d'optimisation.

**5.** Procédé selon l'une quelconque des revendications précédentes, **caractérisé en ce que** sont prises en compte en tant que paramètres (1b) des valeurs de mesure de capteur d'un système de détection externe, qui servent de préférence à l'observation de l'environnement d'engin de travail, en particulier de préférence à l'observation et aux détections de mouvements de navire/de vagues lors de l'emploi de l'engin de travail sur l'eau.

**6.** Procédé selon l'une quelconque des revendications précédentes, **caractérisé en ce qu'**est générée par l'algorithme d'apprentissage et/ou d'optimisation statistique (1d) une sélection de plusieurs hypothèses de modèle de charge individuelles, à partir de laquelle est sélectionné un modèle de charge individuel optimisé selon les besoins de la mise en application, qui offre, pour l'application de l'engin souhaitée, les résultats les plus stables par l'intermédiaire des données enregistrées lors de la phase d'étalonnage (1).

**7.** Procédé selon l'une quelconque des revendications précédentes, **caractérisé en ce que** sont définis par ailleurs pour le modèle de charge individuel créé ou sélectionné les paramètres importants optimaux (1e), qui décrivent le mieux possible le lien entre les paramètres (1b) et la charge, dans lequel la charge réellement prise en charge est calculée, au cours du fonctionnement de l'engin, à l'aide du modèle de charge individuel créé ou sélectionné et des valeurs de capteur et/ou d'état (1b) de l'engin de travail concernant les paramètres importants optimaux (1e).

8. Procédé selon l'une quelconque des revendications précédentes, **caractérisé en ce qu'**une analyse statistique des valeurs de charge calculées dans un cycle de charge (2d) est effectuée pendant le mode de travail (2) pour augmenter la précision du calcul de charge et/ou pour définir des écarts éventuels du résultat calculé par rapport à la charge réelle.

9. Procédé selon l'une quelconque des revendications précédentes, **caractérisé en ce que** les données de capteur et/ou d'état enregistrées pendant les déplacements à vide de l'engin de travail sont utilisées pour surveiller le modèle de charge et/ou les paramètres importants sélectionnés, dans lequel par ailleurs une modification d'engin et/ou d'environnement en particulier, telle des dérives thermiques, des modifications de friction, des défauts, une panne de capteur ou une dérive de capteur, est identifiée au moyen de la surveillance.

10. Procédé selon la revendication 9, **caractérisé en ce que** les paramètres enregistrés pendant des déplacements à vide de l'engin de travail sont utilisés pour optimiser de manière adaptative le modèle de charge utilisé et/ou pour sélectionner des paramètres importants pour adapter le procédé de manière adaptative à des incidences et modifications liées à l'environnement et/ou à l'engin, telles que des effets de la température, un équipement modifié et des modifications de friction en résultant.

11. Procédé selon l'une quelconque des revendications précédentes, **caractérisé en ce que** les paramètres détectés au cours de la phase d'étalonnage (2), qui n'ont pas été pris en compte pour l'obtention de modèle, sont utilisés pour la validation du modèle de charge généré ou sélectionné.

12. Engin de travail, de manière préférée, grue, avec une commande de grue pour mettre en œuvre le procédé selon l'une quelconque des revendications précédentes.

13. Engin de travail selon la revendication 12, **caractérisé en ce que** l'engin présente un ou plusieurs capteurs non étalonnés pour la mise en œuvre du procédé.

**Fig. 1**

1    Kalibrierungsphase

2    Anwendungsphase

1a    Fahrt mit definierter Last

1b    Sensordaten | Zustände

1c    Signifikantzanalyse

1d    Modellstruktur Hypothese

1e    Statistische Modellbildung mit Parameteroptimierung

1f    Auswahl

2a    Sensorik | Zustand

Sensor/Zustands-Daten

2b    Berechnungsvorschrift

2e    Überwachung

2f    Optimierung

2g    Last

Lastzyklus    2d

2c    Statistischer Schätzer (über gesamten Lastzyklus)

EP 2 947 035 B1

Fig.2

Parameterwerte $X_i$ (Druck, Ausladung, Kühlertemperatur,...)

$W_{i,j}$

Gewichte (in Initialisierung nicht bekannt)

$W_j$

Referenzlast $Y_i$ (in Initialisierung bekannt)

Druck

Ausladung

Kühlmitteltemperatur

A

B

C

D

Fig. 3

Fig. 4

Fig. 5

Last

Dynamische
Arbeitsmaschine

Fig. 6

EP 2 947 035 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010025022
- WO 2009054736 A